# EUROPÄISCHE PATENTANMELDUNG

(11) **EP 2 608 391 A1**
(43) Veröffentlichungstag der Anmeldung: **26.06.2013**
(21) Anmeldenummer: 11194184.5
(22) Anmeldetag: 19.12.2011
(51) Int. Cl.: H02M 7/49

(54) **Modularer mehrstufiger Wechselrichter mit einer Vielzahl seriell geschalteter Wechselrichtermodule in parallelen Strängen**

(71) Anmelder: Siemens Aktiengesellschaft, 80333 München (DE)
(72) Erfinder: Bäuerlein, Frank, 92353 Postbauer - Heng (DE)

(57) **Zusammenfassung**

Die Erfindung betrifft eine Stromrichterschaltung (4), die wenigstens zwei Submodule (22) in Reihenschaltung (21) umfasst, die über eine Induktivität (20) elektrische Leistung aus einer eine Gleichspannung (18) abgebenden Leistungsquelle (8) bezieht. Dabei weist jedes Submodul (22) eingangsseitig eine einphasige Halbbrücke (40) und lastseitig eine einphasige Vollbrücke (42) auf, wobei die Halbbrücke (40), die Vollbrücke (42) und ein Zwischenkreiskondensator (44)gleichspannungsseitig parallel geschaltet sind. Ferner ist eine zweite Reihenschaltung (36) aus einem dritten und vierten Submodul (22) parallel zur ersten Reihenschaltung (21) aus dem ersten und zweiten Submodul (22) geschaltet, wobei das erste und dritte Submodul (22) lastseitig gemeinsam und das zweite und vierte Submodul 22 lastseitig gemeinsam verschaltet sind.

## Beschreibung

Die Erfindung betrifft eine Stromrichterschaltung gemäß dem Oberbegriff des Anspruchs 1 und einen Elektromotor.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, die Reihenschaltung der Submodule der eingangs genannten Art redundant auszuführen.

Der Vorschlag geht von der Überlegung aus, dass in der Stromrichterschaltung der eingangs genannten Art eine Spannung aus einer Leistungsquelle auf die einzelnen Eingänge der Submodule aufgeteilt wird, so dass eine Spannungsskalierung erreicht ist. Das heißt, die Spannung der Leistungsquelle kann beliebig auf die Eingänge der einzelnen Submodule verteilt werden.

Darauf basierend ist erfindungsgemäß vorgesehen, in der Stromrichterschaltung nicht nur die Spannungen, sondern auch die Ströme zu skalieren. Dies hat insbesondere in der Automobiltechnik den Vorteil, dass dann hochvolumige Komponenten mit geringeren Kosten verwendet werden können.

Während die Spannungsskalierbarkeit durch eine Reihenschaltung der Submodule erreicht wird, wird die Stromskalierbarkeit durch eine Parallelschaltung der Submodule erreicht.

Die Erfindung gibt daher eine Stromrichterschaltung an, die wenigstens zwei Submodule in Reihenschaltung umfasst, die über eine Induktivität elektrische Leistung aus einer eine Gleichspannung abgebenden Leistungsquelle bezieht. Dabei weist jedes Submodul eingangsseitig eine einphasige Halbbrücke und lastseitig eine einphasige Vollbrücke auf, wobei die Halbbrücke und die Vollbrücke gleichspannungsseitig sowie parallel hierzu ein Zwischenkreiskondensator geschaltet sind. Erfindungsgemäß ist in der angegebenen Stromrichterschaltung eine zweite Reihenschaltung aus einem dritten und vierten Submodul vorhanden, die parallel zur ersten Reihenschaltung aus dem ersten und zweiten Submodul geschaltet ist, wobei das erste und dritte Submodul lastseitig gemeinsam und das zweite und vierte Submodul lastseitig gemeinsam verschaltet sind.

Durch die angegebene Stromrichterschaltung können insbesondere in der Automobilindustrie Kosten eingespart werden. Zudem sinken in jedem einzelnen Submodul die Ströme, wodurch auch die Belastungen auf die einzelnen Submodule sinken.

In einer Weiterbildung der Erfindung umfasst die angegebene Stromrichterschaltung eine erste Steuervorrichtung, die zum getrennten Ansteuern des ersten und dritten Submoduls vorgesehen ist. Damit können das erste und dritte Submodul individuell angesteuert werden, sodass beim Ausfall eines Submoduls das andere eine elektrische Energieversorgung der Last aufrechterhalten werden kann. Auf diese Weise ist das dritte Submodul redundant zum ersten Submodul vorhanden und steigert somit die Zuverlässigkeit der Stromrichterschaltung.

In einer anderen Weiterbildung der Erfindung ist die erste Steuervorrichtung zum Aktivieren des dritten Submoduls basierend auf einem ausgangsseitigen Leistungsfluss vorgesehen. Durch diese Maßnahme kann der Wirkungsgrad gesteigert werden, denn das erste und dritte Submodul können zusammen auf einen Betrieb unter Volllast und ein einzelnes Submodul kann auf einen Betrieb unter einer Teillast ausgelegt werden. Wird der Betrieb unter Teillast anhand des ausgangsseitigen Leistungsflusses festgestellt, so wird eines der beiden Submodule abgeschaltet.

Besonders bevorzugt können dabei die beiden Submodule auf unterschiedliche Teillastbereiche ausgelegt werden, so dass abhängig vom Teillastbereich nur das erste Submodul, nur das dritte Submodul oder alle beide Submodule zusammen betrieben werden.

Die Erfindung gibt auch einen Elektromotor an, der einen Rotor, eine den Rotor antreibende Motorwicklung und eine angegebene Stromrichterschaltung umfasst.

Die Erfindung gibt auch ein Fahrzeug an, das einen angegebenen Elektromotor zu seinem Antrieb umfasst.

Die Erfindung gibt auch ein Verfahren zum Betrieb einer Stromrichterschaltung an, die wenigstens ein erstes und zweites Submodul in einer ersten Reihenschaltung sowie parallel schaltet dazu ein drittes und viertes Submodul in einer zweiten Reihenschaltung umfasst, wobei die erste und zweite Reihenschaltung über eine Induktivität elektrische Leistung aus einer eine Gleichspannung abgebenden Leistungsquelle bezieht, wobei jedes Submodul eingangsseitig eine einphasige Halbbrücke und lastseitig eine einphasige Vollbrücke aufweist, wobei die Halbbrücke und die Vollbrücke gleichspannungsseitig sowie parallel hierzu ein Zwischenkreiskondensator geschaltet sind, und wobei das erste und dritte Submodul sowie das zweite und vierte Submodul ausgangsseitig parallel verschaltet sind. Das Verfahren umfasst die Schritte des Erfassens eines ausgangsseitigen Leistungsflusses durch eine an das erste Submodul angeschlossene Last und des Aktivierens des dritten Submoduls basierend auf dem erfassten Leistungsfluss.

Das angegebene Verfahren kann um Schritte erweitert werden, die sinngemäß den Funktionsmerkmalen der Steuervorrichtung der angegebenen Stromrichterschaltung entsprechen.

Die Erfindung gibt auch eine Steuervorrichtung zur Durchführung des angegebenen Verfahrens an.

In einer Weiterbildung der Erfindung weist die Steuervorrichtung einen Speicher und einen Prozessor auf. Dabei ist das Verfahren in Form eines Computerprogramms in dem Speicher hinterlegt und der Prozessor zur Ausführung des angegebenen Verfahrens vorgesehen, wenn das Computerprogramm aus dem Speicher in den Prozessor geladen ist.

Nachfolgend wird ein Ausführungsbeispiel der Erfindung anhand einer Zeichnung näher erläutert. Darin zeigen:
- FIG 1: eine Schaltung mit einem beispielhaften Umrichter, und
- FIG 2: ein Submodul des Umrichters gemäß FIG 1.

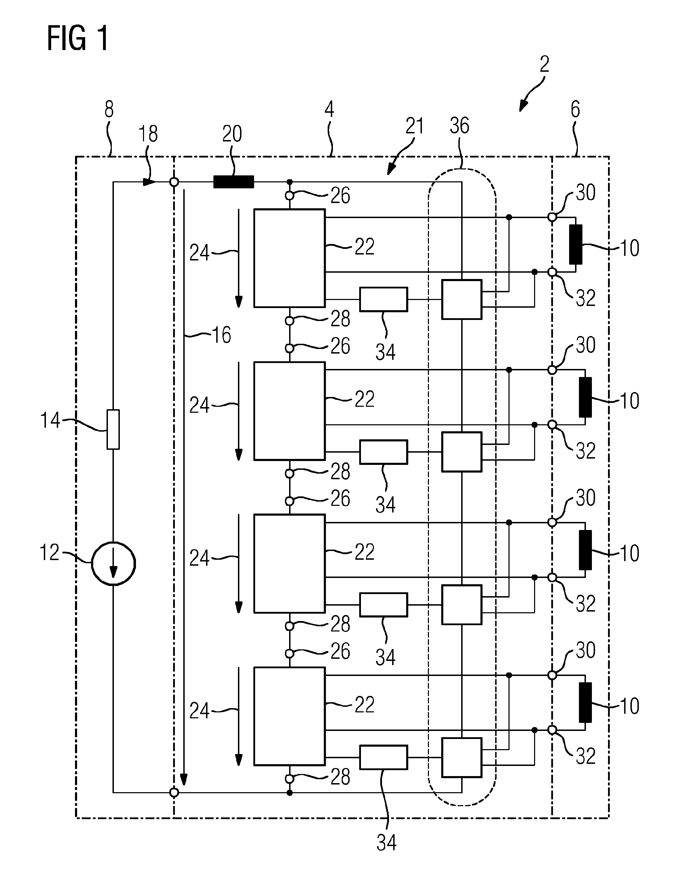

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist vier elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule sein kann. An diese Induktivität 20 schließt sich in Reihe eine erste Reihenschaltung 21 aus vier noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die Lasten 10 mit elektrischer Energie in einer noch zu beschreibenden Weise. Für die Anzahl der Submodule 22 und elektrischen Lasten 10 wurde in der vorliegenden Ausführung vier gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der ersten Reihenschaltung 21 verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die Lasten 10 angeschlossen.

Jedes Submodul 22 in der ersten Reihenschaltung 21 wird durch eine eigene Steuervorrichtung 34 angesteuert, worauf an späterer Stelle näher eingegangen wird.

Parallel zur ersten Reihenschaltung 21 der Submodule 22 ist eine zweite Reihenschaltung 36 geschaltet, die gleich der ersten Reihenschaltung 21 aufgebaut ist. Auf eine extra Referenzierung der Elemente der zweiten Reihenschaltung 36 wird der Übersichtlichkeit halber verzichtet. Wie aus FIG 1 ersichtlich, sind die Submodule 22 der beiden Reihenschaltungen 21, 36 an den Ausgängen 30, 32 miteinander parallel verschaltet.

In nicht gezeigter Weise können die einzelnen Submodule 22 auch an ihren Eingängen 26, 28 untereinander parallel verschaltet sein.

Jede Steuervorrichtung 34 ist zur Ansteuerung eines Submoduls 22 aus der ersten Reihenschaltung 21 und aus der zweiten Reihenschaltung 36 vorgesehen.

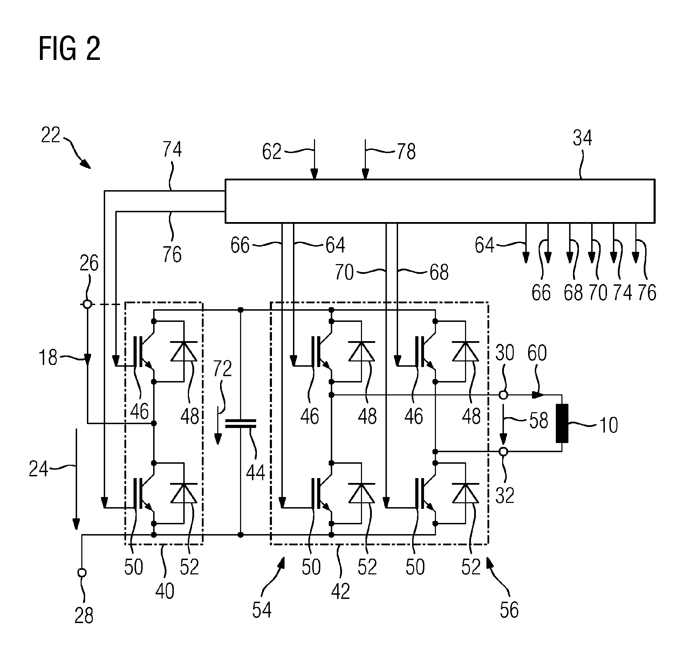

Es wird auf FIG 2 Bezug genommen, die beispielhaft den Aufbau eines der Submodule 22 der ersten und zweiten Reihenschaltung 21, 36 in der Stromrichterschaltung 4 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 40, eine Vollbrücke 42 und einen Zwischenkreiskondensator 44 auf, die miteinander parallel verschaltet sind.

Die Eingangshalbbrücke 40 weist einen ersten Schalter 46 und eine dazu parallel geschaltete erste Freilaufdiode 48 sowie einen dazu in Reihe geschalteten zweiten Schalter 50 und eine dazu antiparallel geschaltete zweite Freilaufdiode 52 auf. Während die erste Freilaufdiode 48 damit den Batteriestrom 18 durchlassen kann, kann die zweite Freilaufdiode 52 den Batteriestrom 18 blocken. Die Schalter 46, 50 können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 48, 52 auch weggelassen werden.

Die erste Teilspannung 24 ist an den zweiten Schalter 50 angelegt, während der erste Schalter 46 in Reihe zwischen dem zweiten Schalter 50 und dem Wechselrichter 42 geschaltet ist. Somit kann der zweite Schalter 50 aus Sicht der Vollbrücke 42 den Eingang aus der Batterie 8 kurzschließen, während der erste Schalter 46 (bei geöffneten zweiten Schalter 50) die Vollbrücke 42 in den Strompfad der Batterie 8 legen kann. Werden in jedem Submodul 22 die Schalter 46, 50 in gleicher Weise abwechselnd geöffnet und geschlossen, ist gemeinsam mit der Induktivität 20 ein Hochsetzsteller geschaffen, der die Summe der Teilspannungen 24 höher setzt, als die Batteriespannung 16. Weiterhin kann durch die Eingangshalbbrücke 40 die Vollbrücke 42 auch dauerhaft aus der Reihenschaltung der drei Submodule 22 entfernt werden, wenn der zweite Schalter 50 dauerhaft geschlossen bleibt.

Die Vollbrücke 42 realisiert einen Vierquadrantensteller, der eine erste Wechselrichterhalbbrücke 54 und eine zweite Wechselrichterhalbbrücke 56 aufweist. Beide Wechselrichterhalbbrücken 54, 56 sind analog zur Eingangshalbbrücke 40 aufgebaut. Die hochgesetzte Teilspannung 24, die über den Zwischenkreiskondensator 44 geglättet wird, kann durch eine geeignete Ansteuerung der Vollbrücke 42 in eine Wechselspannung 58 umgewandelt werden. Die Wechselspannung 58 wird an die elektrische Last 10 angelegt und ruft einen entsprechenden Wechselstrom 60 durch die elektrische Last 10 hervor. Gibt die elektrische Last 10 elektrische Energie an die als Vierquadrantensteller ausgeführte Vollbrücke 42 ab, so kann diese den entsprechenden Leistungsfluss zurück in das Submodul 22 leiten.

Zur Ansteuerung der Vollbrücke 42 ist im Submodul 22 die lokale Steuervorrichtung 34 vorgesehen. Das Steuergerät 34 kann von einem nicht dargestellten übergeordneten Steuergerät über eine nicht gezeigte sichere elektrische Trennung ein Stellsignal 62 empfangen. Basierend auf dem Stellsignal 62 leitet die Steuervorrichtung 34 ein erstes Ansteuersignal 64 für den ersten Schalter 46 der ersten Wechselrichterhalbbrücke 54, ein zweites Ansteuersignal 66 für den zweiten Schalter 50 der ersten Wechselrichterhalbbrücke 54, ein drittes Ansteuersignal 68 für den ersten Schalter 46 der zweiten Wechselrichterhalbbrücke 56 und ein viertes Ansteuersignal 70 für den zweiten Schalter 50 der zweiten Wechselrichterhalbbrücke 56 ab, so dass die Wechselrichterhalbbrücken 54, 56 den Batteriestrom 18 zerhacken und als Wechselstrom 60 durch die elektrische Last 10 so einstellen, das er bestimmten Vorgaben folgt, die dem Steuergerät 62 im Stellsignal 62 mitgeteilt werden. Die Erzeugung der Ansteuersignale 64 bis 70 kann dabei durch eine offene Steuerung oder basierend auf einer Messung des Wechselstromes 60 durch eine geschlossene Regelung erfolgen.

Mit einem fünften Ansteuersignal 74 und einem sechsten Ansteuersignal 76 können entsprechend der zweite Schalter 50 und der erste Schalter 46 in einer dem Fachmann bekannten

Weise angesteuert werden, um die Teilspannung 24 am Eingang 26, 28 des Submoduls 22 hochzusetzen, so dass eine am Zwischenkreiskondensator 44 abfallende Spannung 72 höher ist, als die Teilspannung 24.

Das Steuergerät 34 gibt die Ansteuersignale 66 bis 70 und 74, 76 einmal für das gezeigte Submodul 22 aus, dass der Einfachheit nachstehend der ersten Reihenschaltung 21 zugeordnet werden soll. Das Steuergerät 34 gibt einen weiteren Satz Ansteuersignale 66 bis 70 und 74, 76 aus, um entsprechend das zum gezeigten Submodul 22 parallel geschaltete Submodul 22 aus der zweiten Reihenschaltung 36 anzusteuern.

Ferner kann das Steuergerät beispielsweise von einer nicht gezeigten übergeordneten Steuerung eine Anweisung 78 erhalten, eines der beiden zuvor genannten Submodule 22 abzuschalten und den Betrieb nur mit einem der Submodule 22 fortzusetzen.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung (21), die über eine Induktivität (20) elektrische Leistung aus einer eine Gleichspannung (18) abgebenden Leistungsquelle (8) bezieht,
- wobei jedes Submodul (22) eingangsseitig eine einphasige Halbbrücke (40) und lastseitig eine einphasige Vollbrücke (42) aufweist, und
- wobei die Halbbrücke (40) und die Vollbrücke (42) gleichspannungsseitig sowie parallel hierzu ein Zwischenkreiskondensator (44) geschaltet sind,
**gekennzeichnet durch**
eine zweite Reihenschaltung (36) aus einem dritten und vierten Submodul (22), die parallel zur ersten Reihenschaltung (21) aus dem ersten und zweiten Submodul (22) geschaltet ist, wobei das erste und dritte Submodul (22) lastseitig gemeinsam und das zweite und vierte Submodul 22 lastseitig gemeinsam verschaltet sind.

2. Stromrichterschaltung nach Anspruch 1, **gekennzeichnet durch** eine erste Steuervorrichtung (34), die zum getrennten Ansteuern des ersten und dritten Submoduls (22) vorgesehen ist.

3. Stromrichterschaltung nach Anspruch 2, **dadurch gekennzeichnet , dass** die erste Steuervorrichtung (34) zum Aktivieren des dritten Submoduls (22) basierend auf einem ausgangsseitigen Leistungsfluss vorgesehen ist.

4. Elektromotor, umfassend Rotorwicklungen (10) zum Antreiben eines Rotors und eine Stromrichterschaltung (4) nach Anspruch 1 zur elektrischen Energieversorgung der Motorwicklungen (10) .

5. Fahrzeug, umfassend einen Elektromotor Anspruch 2 zu seinem Antrieb.

6. Verfahren zum Betrieb einer Stromrichterschaltung (4), die wenigstens ein erstes und zweites Submodul (22) in einer ersten Reihenschaltung (21) sowie parallel schaltet dazu ein drittes und viertes Submodul (22) in einer zweiten Reihenschaltung (36) umfasst, wobei die erste und zweite Reihenschaltung (21, 36) über eine Induktivität (20) elektrische Leistung aus einer eine Gleichspannung (16) abgebenden Leistungsquelle (8) bezieht, wobei jedes Submodul (22) eingangsseitig eine einphasige Halbbrücke (40) und lastseitig eine einphasige Vollbrücke (42) aufweist, wobei die Halbbrücke (40) und die Vollbrücke (42) gleichspannungsseitig sowie parallel hierzu ein Zwischenkreiskondensator (44) geschaltet sind, und wobei das erste und dritte Submodul (22) sowie das zweite und vierte Submodul (22) ausgangsseitig parallel verschaltet sind,
**gekennzeichnet durch** die Schritte:
- Erfassen eines ausgangsseitigen Leistungsflusses **durch** eine an das erste Submodul (22) angeschlossene Last, und
- Aktivieren des dritten Submoduls (22) basierend auf dem erfassten Leistungsfluss.

7. Steuervorrichtung zur Durchführung des Verfahrens nach Anspruch 6.
